# EUROPÄISCHE PATENTSCHRIFT

(11) **EP 0 351 728 B1**
(45) Veröffentlichungstag und Bekanntmachung des Hinweises auf die Patenterteilung: **01.12.1993**
(21) Anmeldenummer: 89112933.0
(22) Anmeldetag: 14.07.1989
(51) Int. Cl.: C08G 18/10, C08G 18/32, C08G 18/22, E06B 3/56, C09K 3/10, C09J 175/04

(54) **Verfahren zur Erzeugung eines Dicht- und Klebmittelstranges.**
Process for the manufacture of a strand of sealing or adhesive material.
Procédé de fabrication d'un toron de matière d'étanchement ou d'adhésif.

(30) Priorität: 21.07.1988 DE 3824771
(43) Veröffentlichungstag der Anmeldung: 24.01.1990
(73) Patentinhaber: Teroson GmbH, 69046 Heidelberg (DE)
(72) Erfinder: Scheffler, Ingolf, Dr., D-6908 Wiesloch (DE); Hirthammer, Michael, Dr., D-6900 Heidelberg (DE); Schleicher, Anton M., D-6900 Heidelberg (DE); Delbeck, Jean-Willem, D-6940 Weinheim (DE)
(74) Vertreter: UEXKÜLL & STOLBERG

(56) Entgegenhaltungen:
- EP-A- 0 255 572
- WO-A-88/06165
- FR-A- 2 240 101
- GB-A- 1 400 157
- CHEMICAL ABSTRACTS, Band 84, Nr. 20, 17. Mai 1976, Seite 61, Zusammenfassung Nr. 136827s, Columbus, Ohio, US; & JP-A-75 135 138

## Beschreibung

Es sind bereits zahlreiche Formulierungen für einkomponentige Dicht- und Klebmittel bekannt, welche Präpolymere mit telechelen Isocyanatgruppen (hergestellt aus Diisocyanaten im stöchiometrischen Überschuß mit Polyolen) enthalten und welche unter dem Einfluß von Feuchtigkeit härten. Bei Verwendung von aromatischen Isocyanaten werden diesen Systemen Katalysatoren, insbesondere Zinnverbindungen, zur Beschleunigung der Härtung zugesetzt.

Solche einkomponentigen PU-Systeme finden u.a. auch im Automobilbau zur Direktverglasung von Kraftfahrzeugen Verwendung. Schwierigkeiten können jedoch auftreten, wenn die Luftfeuchtigkeit gering ist, insbesondere bei tieferen Außentemperaturen im Winterhalbjahr. Die Härtung der Dichtmittel erfolgt dann so langsam, daß die eingesetzten Scheiben längere Zeit mit Hilfe geeigneter Spannvorrichtungen gehalten werden müssen. Weitere Montagearbeiten, z.B. das Anschlagen der Türen oder Arbeiten unter Kippen der Karosserie können nicht durchgeführt werden, solange das Dichtmittel noch nicht ausreichend gehärtet ist.

Es ist zwar aus der US-PS 37 55 261 bekannt, daß Präpolymere mit endständigen Isocyanatgruppen bei erhöhter Temperatur vernetzt werden können, wenn man ihnen eine stöchiometrische Menge einer Komplexverbindung aus Methylendianilin und Natriumchlorid zusetzt. Bei höheren Temperaturen dissoziiert dieser Komplex in das freie Methylendianilin und Natriumchlorid, und das Methylendianilin reagiert mit den Isocyanatgruppen des Präpolymeren zu einem vernetzten Harnstoff. Bei Raumtemperatur ist dieses Gemisch lagerstabil. Es werden in der US-PS keinerlei Hinweise auf eine Feuchtigkeitshärtung gegeben. Außerdem ist bekannt, daß sich derartige PU-Systeme mit Hilfe von Mikrowellen erhitzen und dadurch härten lassen (US-PS 40 83 901). Bei beiden Verfahren wird die Komplexverbindung aus Methylendianilin und Natriumchlorid in stöchiometrischen Mengen, bezogen auf die reaktiven Isocyanatgruppen des Polyurethanpräpolymeren, kurz vor der Härtungsreaktion zugemischt.

Zweikomponentige PU-Systeme vermögen zwar schnell zu härten, ihre Handhabung ist jedoch wesentlich komplizierter und apparativ viel aufwendiger.

Es besteht somit ein Bedarf für ein Verfahren unter Verwendung eines einkomponentigen Dicht- und Klebmittels auf Polyurethanbasis, bei welchem rasch soweit gehärtet werden kann, daß eine ausreichende mechanische Stabilität erreicht wird. Die vollständige Aushärtung, beispielsweise unter Feuchtigkeitseinfluß, könnte dagegen längere Zeit beanspruchen, ohne daß dadurch die Montagearbeiten beeinträchtigt werden.

Gegenstand der Erfindung ist ein Verfahren zur Erzeugung eines Dicht- und Klebmittelstranges, insbesondere zur Direktverglasung von Kraftfahrzeugen, unter Verwendung einer feuchtigkeitshärtenden Einkomponenten-Polyurethanmasse auf Basis von telechelen Isocyanatpräpolymeren aus aromatischen Diisocyanaten im stöchiometrischen Überschuß und Polyolen, welches dadurch gekennzeichnet ist, daß man eine
a) einen Katalysator für die Feuchtigkeitshärtung und
b) ein blockiertes aktivierbares Vernetzungsmittel enthaltende Masse verwendet und beim Extrudieren des Stranges fortlaufend in dessen Inneres ein polares aprotisches Lösungsmittel oder Lösungsmittelgemisch injiziert, welches das blockierte Vernetzungsmittel freisetzt.

Vorzugsweise wird das blockierte aktivierbare Vernetzungsmittel in deutlich unterstöchiometrischen Mengen eingesetzt.

Wenn bei der Applikation der erfindungsgemäß verwendeten Dicht- und Klebmittel ausreichend hohe absolute Luftfeuchtigkeit vorhanden ist, härten diese wie konventionelle einkomponentige Kleb- und Dichtmittel bei Raumtemperatur mit der Luftfeuchtigkeit aus. Wenn jedoch die zur Verfügung stehende Luftfeuchtigkeit für eine rasche Aushärtung nicht ausreicht oder bereits sehr kurze Zeit nach der Applikation des Kleb- und Dichtmittels höhere mechanische Festigkeiten gefordert werden, kann das blockierte Vernetzungsmittel durch Injizieren des Lösungsmittels aktiviert werden, so daß eine partielle Härtung in Form einer Seele im Inneren des Stranges kurzzeitig erreicht wird. Die weitere Aushärtung bis zur Endfestigkeit erfolgt dann durch Weiterreaktion mit der Luftfeuchtigkeit. Mit einem derartigen Verfahren bekommt der Anwender die Möglichkeit, die Härtungscharakteristiken des Klebeverbundes gezielt zu beeinflussen, ohne daß die Zusammensetzung des Kleb- und Dichtmittels verändert werden muß. Mit diesem Verfahren lassen sich insbesondere die oben geschilderten Probleme bei der Direktverglasung von Kraftfahrzeugen auf Montagebändern lösen, wegen des sehr geringen apparativen Aufwandes können die erfindungsgemäßen Dicht- und Klebmittel jedoch auch in Kraftfahrzeugwerkstätten bei dem Ersatz von Windschutzscheiben eingesetzt werden.

Obwohl der Einsatz in der Automobil-Industrie eine bevorzugte Anwendung darstellt, ist das erfindungsgemäße Verfahren überall dort günstig anzuwenden, wo in kurzer Zeit Anfangsfestigkeiten erforderlich sind, die konventionelle feuchtigkeitshärtende Materialien allein nicht erreichen.

Die Polyurethanpräpolymeren werden auf an sich bekannte Weise aus überschüssigem aromatischen Diisocyanat und einem Polyol hergestellt. Geeignete aromatische Diisocyanate sind beispielsweise Diphenylmethandiisocyanat (MDI), Toluylendiisocyanat (TDI), Naphthalindiisocyanat, p-Phenylendiisocyanat und 1,3-bis(Isocyanatomethyl)benzol sowie m- oder p-Tetramethylxyloldiisocyanat (m-TMXDI bzw. p-TMXDI).

Als Polyolkomponente kommen Polyetherpolyole wie Polyethylenoxid, Polypropylenoxid, Polytetrahydrofuran und deren Copolymere sowie Polyesterpolyole und hydroxyfunktionelle Polycaprolactone in Betracht. Weiterhin können die in der EP-OS 240698 beschriebenen verträglichen Mischungen aus Polyetherpolyolen, Polyesterpolyolen und niedermolekularen hydroxyfunktionellen Methacrylatpolymeren verwendet werden.

Die bevorzugten Katalysatoren für die Feuchtigkeitshärtung der aromatischen Isocyanatpräpolymeren sind Zinnverbindungen wie Zinn(II)octoat, Dibutylzinnlaurat und Dibutylzinnmaleat. Ferner sind Organo-Quecksilber, -Blei- und -Bismutverbindungen wie z.B. Phenylquecksilberacetat oder Bleinaphthenat brauchbar. Mengen von 0,01 bis 1,0, vorzugsweise 0,02 bis 0,5 Gew.% finden Verwendung. Zusätzlich können die oben genannten Katalysatoren in bekannter Weise mit tertiären Aminen kombiniert werden.

Als blockierte, durch Lösungsmittelzusatz aktivierbare Vernetzungsmittel sind einmal komplexierte Amine, insbesondere die Komplexverbindung aus Methylendianilin (MDA) und NaCl, zu nennen. Bei diesem Komplex ist das MDA in ein aufgeweitetes Kochsalzgitter eingebaut, die stöchiometrische Zusammensetzung dieses Komplexes wird in der Literatur mit (MDA)₃.NaCl angegeben. Diese Verbindung ist unter der Handelsbezeichnung CAYTUR® von der Firma Uniroyal erhältlich. Andere Komplexe des MDA oder des 2,3-Di(4-aminophenyl)butans mit Natriumbromid, Natriumiodid, Natriumnitrit, Lithiumchlorid, Lithiumbromid, Lithiumiodid, Lithiumnitrit oder Natriumcyanid sind ebenfalls geeignet. Weiterhin eignen sich Komplexe des Tris(2-aminoethylamins) mit Erdalkaliverbindungen wie z.B. Calciumchlorid, Magnesiumchlorid oder Strontiumchlorid sowie feste, bei Temperaturen unter 60°C im System unlösliche Polyaminkomplexe, die unter Lösungsmitteleinfluß hinreichend schnell dissoziieren. Es werden Mengen von 0,25 bis 5,0, vorzugsweise 0,5 bis 2,0 Gew.% zugesetzt.

Durch Zusatz geeigneter Lösungsmittel dissoziieren diese Komplexverbindungen und das freigesetzte Polyamin reagiert mit den Isocyanatgruppen des Polyurethanpräpolymeren unter Harnstoffbildung. Die gewünschte Festigkeit nach dieser Vorvernetzung kann dabei in bestimmten Grenzen geregelt werden; z.B. kann durch die Menge an zugefügter Komplexverbindung die Anzahl der abreagierenden Isocyanatgruppen gesteuert werden. Auswahlkriterien sind dabei die notwendige mechanische Kurzzeitfestigkeit sowie die für die Vorhärtung zur Verfügung stehende Zeit. Durch den Lösungsmittelzusatz und die dadurch ausgelöste Freisetzung des Härters erfolgt die Vorhärtung innerhalb des Dicht- und Klebmittelstranges von innen nach außen. Es bildet sich eine gehärtete Seele aus, deren Durchmesser mit der Zeit rasch zunimmt, wie sich beobachten läßt. Offenbar findet dabei keine Diffusion des Härters statt, die Reaktion wird vielmehr durch das freigesetzte Amin bzw. Wasser ausgelöst. Die vollständige Aushärtung und das Erreichen der Endfestigkeit bewirkt dann die Reaktion der restlichen Isocyanatgrupen des Präpolymeren mit der Luftfeuchtigkeit unter Einfluß des Katalysators.

Als weitere aktivierbare Vernetzungsmittel kommen polyamino- oder polyhydroxyfunktionelle Verbindungen in Betracht, welche mikroverkapselt sind und dadurch bei der Lagerung bei Raumtemperatur für eine Reaktion mit dem Isocyanatpräpolymeren nicht zur Verfügung stehen. Die Funktionalität und das Molekulargewicht der polyamino- bzw. polyhydroxyfunktionellen Verbindungen richtet sich dabei nach den gewünschten mechanischen Eigenschaften des gehärteten Kleb- und Dichtstoffes. Vorzugsweise handelt es sich hierbei um niedermolekulare difunktionelle Amine oder Alkohole, da diese aufgrund ihres niedrigen Molekulargewichtes nur zu sehr geringen Prozentsätzen zugesetzt werden. Zur Verkapselung wird dabei das Vernetzungsmittel in genügend feine Teilchen dispergiert, anschließend wird auf diesen Kern des Vernetzungsmittels eine Schale eines geeigneten Polymeren aufpolymerisiert. Beispiele für geeignete Polymere sind Poly(meth)acrylate, insbesondere Polymethylmethacrylat, erzeugt durch radikalische Polymerisation oder Photopolymerisation, Polyurethane oder Polyharnstoffe, erzeugt durch Zusatz von flüssigen oder gelösten Polyisocyanaten, die dann mit der Oberfläche des Vernetzungsmittels zu einer festen Schale reagieren, und Polycyanacrylate, erzeugt durch Zusatz von Cyanacrylatmonomer, das in einer anionischen Polymerisation auf der Oberfläche mit dem Vernetzungsmittel reagiert. Weitere Möglichkeiten zur Erzeugung der inerten Schale um das Vernetzungsmittel sind die an sich bekannten Koazervationstechniken, mit denen auf der Oberfläche der Vernetzungsmittel Gelatineschalen erzeugt werden. Neben den hier aufgeführten Verfahren zur Erzeugung einer dichten Polymerschale um das Vernetzungsmittel sind viele weitere Polymere und Copolymere zur Erzeugung dieser Schale geeignet. Dabei sind folgende Auswahlkriterien zu beachten: Das Monomer für die Schale soll möglichst sehr geringe Löslichkeit im Vernetzungsmittel haben und bei verhältnismäßig niedrigen Temperaturen vollständig polymerisierbar sein. Das so erzeugte Schalenpolymer muß einen Erweichungspunkt von über 60°C haben und darf mit den übrigen Bestandteilen des Kleb- und Dichtmittels unterhalb von 60°C nicht anquellen oder in ihnen löslich sein.

Das verkapselte Vernetzungsmittel hat vorzugsweise einen Schmelz- oder Erweichungspunkt zwischen 60 und 90°C, so daß es während des Verkapselungsvorgangs als sehr feinteilige Dispersion in einem inerten Lösungsmittel vorgelegt werden kann. Beispiele für derartige Vernetzungsmittel sind Diamine wie Methylendianilin, 2,3-Di(4-aminophenyl)butan, Hexamethylendiamin und Dodecamethylendiamin. Beispiele für geeignete Diole sind Neopentylglykol, Hexandiol, Decandiol, Hydroxypivalinsäure-neopentylglykolester sowie andere Polyesterdiole mit einem Schmelz- bzw. Erweichungspunkt zwischen 60 und 120°C. Solche verkapselten Vernetzungsmittel weisen den Vorteil gegenüber den Salzkomplexen von Diaminen auf, daß sie keine Salze wie Kochsalz enthalten.

Das erfindungsgemäß verwendete Einkomponenten-Polyurethansystem zeichnet sich dadurch aus, daß die beschriebenen Vernetzungsmittel nur zu einem geringen Prozentsatz zu den an sich bekannten einkomponentigen feuchtigkeitshärtenden Kleb-und Dichtstoffen zugesetzt werden müssen. Dadurch werden deren gewünschte Eigenschaften wie z.B. ausgezeichnete Haftung auf lackiertem Metall und vorbehandeltem Glas, wie es für die Direkteinglasung von Automobilen unbedingt notwendig ist, nicht beeinflußt. Das Einkomponenten-Polyurethansystem kann weiterhin an sich bekannte Füllstoffe und Rheologie-Hilfsmittel enthalten. Dadurch besitzt das System ein extrem gutes Standvermögen, so daß es in der gewünschten Profilform auf die Glasscheiben oder auf die Flanschteile extrudiert werden kann.

Zur Aktivierung des blockierten bzw. mikroverkapselten Vernetzungsmittels dienen erfindungsgemäß polare aprotische Lösungsmittel. Geeignet sind beispielsweise Acetaldehyd und dessen Derivate, Aceton, Acetonitril, Benzaldehyd und dessen Derivate, Benzonitril, n-Butylacetat, γ-Butyrolacton, Chlorbenzol, kernalkylierte Chlorbenzole, Chloroform, 2-Caprolacton, Cyclopentancarboxaldehyde, Dichlormethan, Diethoxysulfid, Diethylenglykoldiester, 2,2′-(Dimethylamino)diethylether, Dimethylformamid, Dimethylsulfoxid, 2,6-Dimethyl-4-pyron, Dioxan, Ethylacetat, Formaldehyddimethylacetal, Hexamethylphosphorsäuretriamid, Isobutylmethylketon, Methylethylketon, N-Methylpyrrolidon, Methoxybenzol, 2-Methyl-4-pentanon, 2-Methylpyrazin, Nitroaliphaten, Nitrobenzol, 2,4-Pentandion, Phosphorsäuretributylester, Pyridin, Tetrahydrofuran, Tetrahydronaphthalin, Trichlorethylen, Valeraldehyd, N-Vinylimidiazol und N-Vinylpyrrolidon. Besonders bevorzugt sind γ-Butyrolacton, Tetrahydrofuran, N-Vinylpyrrolidon und N-Methylpyrrolidon. Es können auch Gemische mehrerer Lösungsmittel verwendet werden. Darüber hinaus kann den aprotischen Lösungsmitteln Wasser zugesetzt werden, vorausgesetzt, daß es die Aktivierung des blockierten bzw. mikroverkapselten Vernetzers nicht behindert, was im Einzelfall leicht ausprobiert werden kann. Vorzugsweise beträgt jedoch der Wassergehalt nicht mehr als etwa 30 Gew.%, bezogen auf das gesamte Lösungsmittel. Das Wasser vermag einerseits mit Isocyanatgruppen zu reagieren. Andererseits kann es den Vernetzer aktivieren, indem es z.B. aus dem MDA-Komplex das Salz herauslöst oder bei verkapselten Verbindungen das Schalenpolymer auflöst.

Unter Umständen kann es günstig sein, dem Lösungsmittel oder Lösungsmittelgemisch einen Zusatz zuzufügen, welcher die Ausbildung eines hohlen Kanals im Inneren des Dichtmittelstranges verhindert, da ein derartiger Kanal u.U. die mechanische Festigkeit des Stranges beeinträchtigen könnte. Hierfür kommen insbesondere die Isocyanat-Präpolymeren in Betracht, welche auch die Basis des Dicht- und Klebmittels bilden, jedoch ohne den Katalysator und das Vernetzungsmittel. Im allgemeinen beträgt der Gehalt an derartigen Zusätzen, insbesondere Isocyanat-Präpolymeren, im Injektionsgemisch bis zu 10 Gew.%, vorzugsweise etwa 2 bis 8 Gew.%.

Beim Aufbringen des Dicht- und Klebmittelstranges auf ein Substrat, beispielsweise eine Glasscheibe für ein Kraftfahrzeug, wird die Lösungsmittelinjektion günstigerweise erst mit geringer zeitlicher Verzögerung gegenüber dem Extrudieren des Stranges begonnen und kurz vor Beendigung des Extrudierens beendet, um eine vorzeitige Anhärtung der beiden Enden des Stranges zu vermeiden und um deren nahtloses Zusammenfügen zu ermöglichen. Durch die partielle Aushärtung an den übrigen Bereichen des Glas/Metallverbundes kann die Scheibe nach Einsetzen in die Karosserie in sehr kurzer Zeit mit ausreichender Festigkeit fixiert werden, so daß ein Abgleiten verhindert wird. Die partielle An- bzw. Aushärtung des Kleb- und Dichtmittels macht ein zusätzliches mechanisches Fixieren der Glasscheibe unnötig. Die vollständige Aushärtung des Kleb- und Dichtmaterials geschieht anschließend durch die Reaktion mit der vorhandenen Luftfeuchtigkeit bei Raumtemperatur.

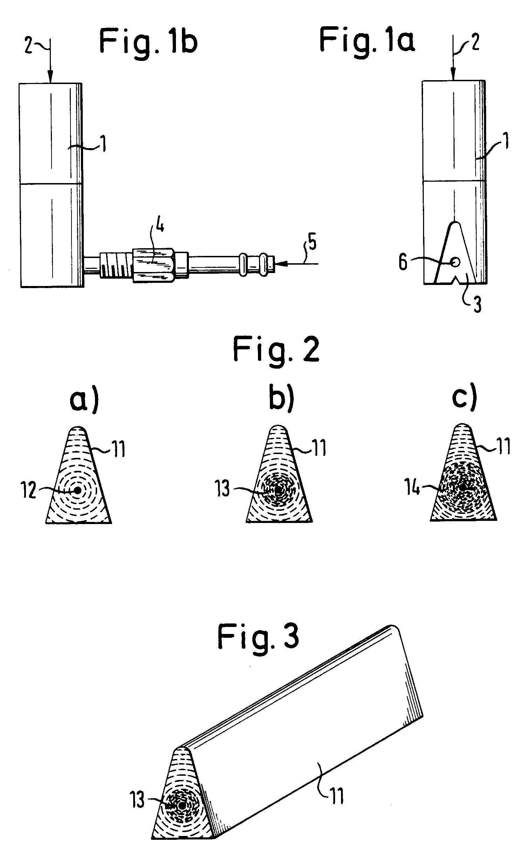

Eine zur Durchführung des erfindungsgemäßen Verfahrens geeignete Vorrichtung in Form einer Extrusionsdüse zeigen schematisch im Schnitt die Figuren 1a und 1b. Der Extrusionsdüse 1 wird das Kleb- und Dichtmittel von oben bei 2 zugeführt. Es tritt unten aus der dreieckförmigen Öffnung 3 seitlich aus und wird in Form eines im Querschnitt dreieckförmigen Stranges auf das jeweilige Substrat (z.B. die Glasscheibe) aufgetragen. Seitlich ist eine Injektionsnadel 4 für das Lösungsmittel bzw. Lösungsmittelgemisch an die Extrusionsdüse angesetzt, wobei das Lösungsmittel bei 5 in die Nadel eintritt. Die Austrittsöffnung 6 der Injektionsnadel ist in die Extrusionsrichtung gerichtet und im Bereich der Mittelachse der den Strang formenden Öffnung 3 angeordnet, so daß das Lösungsmittel in Längsrichtung gesehen in das Innere, vorzugsweise in die Mitte des Profilstranges injiziert werden kann. Das Lösungsmittel bzw. Lösungsmittelgemisch kann mit Hilfe einer Kolbenbürette oder einer ähnlichen Dosiervorrichtung zudosiert werden. Ein bestimmtes stöchiometrisches Verhältnis braucht dabei jedoch nicht eingehalten zu werden.

Die Figur 2 zeigt einen erfindungsgemäß hergestellten Profilstrang im Schnitt. Dabei enthält der Profilstrang 11 etwa in der Mitte das injizierte Lösungsmittel 12 (Figur 2a). Nach kurzer Zeit hat sich konzentrisch von dem Lösungsmittel ausgehend bereits eine gehärtete Seele 13 von erheblich größerem Durchmesser ausgebildet (Figur 2b) und bald danach erreicht der ausgehärtete Bereich 14 die äußeren Begrenzungsflächen des Profils (Figur 2c). In der Figur 3 ist der Zustand der Figur 2b nochmals perspektivisch im Schnitt dargestellt.

Zur näheren Erläuterung der Erfindung sollen die nachfolgenden Beispiele dienen, auf welche die Erfindung jedoch nicht beschränkt ist.

### Beispiel 1

In einem Vakuumplanetenmischer wurde ein Kleb- und Dichtstoff aus folgenden Komponenten hergestellt:
52,44% PU-Präpolymer aus einem Polyetherol und MDI mit reaktiven Isocyanatendgruppen, Isocyanatequivalentgewicht 3400
31,35% einer Mischung aus Ruß und feinteiligem Calciumcarbonat im Gewichtsverhältnis 2:1
14,97% C₇-C₁₁-Alkohol-phthalat als Weichmacher
0,20% Nickel-dibutyldithiocarbamat
0,04% Dibutylzinnmaleat als Katalysator
1,00% Komplexverbindung (MDA)₃NaCl als blockierter Vernetzer.

Zum Vergleich wurde ein Kleb- und Dichtstoff wie oben angegeben hergestellt, jedoch wurde die Komplexverbindung durch gleiche Teile Füllstoff und Weichmacher ersetzt.

Für die nachfolgenden Härtungsexperimente wurden Klebverbindungen aus Glasscheiben (Abmessungen 100 x 25 x 5 mm) hergestellt; dabei wurden die zu verklebenden Flächen mit Isopropanol und einem geeigneten Primer vorbehandelt. Die Abmessungen der Klebefuge betrugen 25 x 8 x 5 mm. Nach den in den nachfolgenden Tabellen angegebenen Härtungsbedingungen wurde jeweils die Zugscherfestigkeit in N/cm² gemessen.

Bei den Materialien des Standes der Technik ist die Härtungsgeschwindigkeit sehr vom Feuchtigkeitsangebot abhängig. Tabelle 1 zeigt die Zugscherfestigkeiten gemessen an vorbehandelten Glas-Glasverklebungen bei 25% und 50% Luftfeuchtigkeit unter Verwendung der Masse ohne Komplexverbindung.

**Tabelle 1**

| Zeit | 25% r.F. | 50% r.F. |
|---|---|---|
| | N/cm² | N/cm² |
| 1 Tag | 68 ± 4 | 110 ± 25 |
| 3 Tage | 175 ± 44 | 338 ± 40 |
| 7 Tage | 255 ± 60 | 442 ± 21 |

Abriß überwiegend kohäsiv.

Das obige Dicht- und Klebmittel wurde durch Injektion eines Lösungsmittelgemisches bei 25% und 50% Luftfeuchtigkeit und einer Temperatur von 23°C gehärtet. Tabelle 2 zeigt die Zugscherfestigkeiten (N/cm²) gemessen an der Glas-Glasverklebung bei Verwendung verschiedener Lösungsmittelgemische:
- A: 70 Gew.% γ-Butyrolacton + 30 Gew.% Wasser
- B: 70 Gew.% Tetrahydrofuran + 30 Gew.% Wasser
- C: 70 Gew.% N-Vinylpyrrolidon + 30 Gew.% Wasser

**Tabelle 2**

| Zeit | A | | B | | C | |
|---|---|---|---|---|---|---|
| | 25% r.F. | 50% r.F. | 25% r.F. | 50% r.F. | 25% r.F. | 50% r.F. |
| 1 Tag | 142±42 | 195±70 | 103±19 | 88±27 | 80± 30 | 120± 53 |
| 3 Tage | 346±41 | 318±87 | 211± 2 | 236±92 | 180±104 | 294±104 |
| 7 Tage | 354±22 | 357±29 | 268±47 | 358±64 | 321± 16 | 320± 11 |

### Beispiel 2

Zur Bestimmung der Durchhärtungsgeschwindigkeit unter Feuchtigkeitsausschluß wurden in Dreiecksraupen verschiedene Lösungsmittel in die Masse des Beispiels 1 injiziert. Direkt nach Applikation der Raupe wurde sie zum Ausschluß von Feuchtigkeit in Aluminiumfolie eingepackt. Die Durchhärtungsgeschwindigkeit wurde anhand des Durchmessers der Seelenbildung bestimmt; bei 10 mm Durchmesser ist vollständige Durchhärtung erreicht. Ohne Lösungsmittelinjektion fand unter diesen Bedingungen überhaupt keine Härtung statt.

**Tabelle 3**

| Zeit (h) | NVP:H₂O 70:30 | BL 100 | BL/H₂O 70/30 |
|---|---|---|---|
| | Seele (mm) | Seele (mm) | Seele (mm) |
| 0,5 | 3,0 | 2,5 | 3,1 |
| 1 | 3,6 | 3,7 | 3,8 |
| 2 | 5,0 | 5,1 | 5,2 |
| 4 | 7,0 | 6,3 | 7,0 |
| 6 | 7,3 | 7,6 | 7,4 |
| 21 | 10,0 | 9,6 | 10,0 |
| NVP = N-Vinylpyrrolidon BL = γ-Butyrolacton | | | |

### Beispiel 3

In einer Mörsermühle wurde Dodecamethylendiamin auf eine Kornfeinheit < 100µm gemahlen. In einer Apparatur aus Dreihalskolben, Umwälzpumpe und Photoreaktor, bestückt mit einer 250 W Quecksilberdampflampe wurden 60 g des Amins im Dreihalskolben zu einer 20% Festkörper enthaltenden wässrigen Dispersion verarbeitet. In einer Stickstoffatmosphäre tropften zu dieser Dispersion unter ständigem Rühren 100 g Methylmethacrylat, in dem 0,1% eines Photoinitiators vom Benzoinethertyp gelöst war. Außerdem wurde die Dispersion ständig vom Photoreaktor in den Dreihalskolben und zurück umgepumpt. Nach drei Stunden war die Monomerzugabe beendet, zur vollständigen Polymerisation wurde die Dispersion noch weitere 2 Stunden lang durch den Photoreaktor gepumpt. Anschließend wurde das derart verkapselte Amin abfiltriert und im Hochvakuum getrocknet.

Eine 3%-ige Dispersion dieses Amins in einem Präpolymer Weichmachergemisch, wie es für die Herstellung des Kleb-/Dichtstoffes des Beispiels 1 Verwendung fand, zeigt eine voll befriedigende Lagerstabilität. Wird diese Mischung wie in Beispiel 1 mit einem Lösungsmittel versetzt, so ist sie nach kurzer Zeit ausgehärtet, d.h. das verkapselte Amin ist für das erfindungsgemäße Verfahren geeignet. Besonders bevorzugte Lösungsmittel sind neben den oben bereits hervorgehobenen (γ-Butyrolacton etc.) ferner Butylacetat, Chloroform sowie Dethylenglycoldiester.

### Beispiel 4

In einer Mörsermühle wurde Methylendianilin auf eine Kornfeinheit <100µm gemahlen. In einem Dreihalskolben wurden 40 g des Amins unter Feuchtigkeitsausschluß in trockenem Petrolether zu einer 20%-igen Dispersion verteilt. Unter schnellem Rühren tropften innerhalb von 4 Stunden 28 g eines flüssigen Diphenylmethandiisocyanats (MDI, Isocyanatequivalentgewicht 143) zu dieser Dispersion. Nach weiteren 3 Stunden Rühren war in der Dispersion IR-spektroskopisch kein Isocyanat mehr nachweisbar. Der feinteilige Feststoff wurde abfiltriert und im Vakuum getrocknet.

Eine 3%-ige Dispersion dieses mit Polyharnstoff verkapselten Amins in einer Präpolymer/Weichmachermischung zeigt ebenfalls vollbefriedigende Lagerstabilität und härtet unter Lösungsmittelzusatz schnell aus, d.h. das verkapselte Amin ist für das erfindungsgemäße Verfahren geeignet. Die oben bereits hervorgehobenen Lösungsmittel (γ-Butyrolacton etc.) sind besonders bevorzugt.

## Patentansprüche

1. Verfahren zur Erzeugung eines Dicht- und Klebmittelstranges, insbesondere zur Direktverglasung von Kraftfahrzeugen, unter Verwendung einer feuchtigkeitshärtenden Einkomponenten-Polyurethanmasse auf Basis von telechelen Isocyanatpräpolymeren aus aromatischen Diisocyanaten im stöchiometrischen Überschuß und Polyolen, dadurch gekennzeichnet, daß man eine a) einen Katalysator für die Feuchtigkeitshärtung und b) ein blockiertes aktivierbares Vernetzungsmittel enthaltende Masse verwendet und beim Extrudieren des Stranges fortlaufend in dessen Inneres ein polares aprotisches Lösungsmittel oder Lösungsmittelgemisch injiziert, welches das blockierte Vernetzungsmittel freisetzt.

2. Verfahren nach Anspruch 1, dadurch gekennzeichnet, daß es als Katalysator eine Zinnverbindung enthält.

3. Verfahren nach Anspruch 1 oder 2, dadurch gekennzeichnet, daß es als blockiertes Vernetzungsmittel eine Methylendianilin/Natriumchlorid-Komplexverbindung enthält.

4. Verfahren nach Anspruch 1 oder 2, dadurch gekennzeichnet, daß es als blockiertes Vernetzungsmittel eine polyamino- oder hydroxyfunktionelle Verbindung in mikroverkapselter Form enthält.

5. Verfahren nach Anspruch 4, dadurch gekennzeichnet, daß die polyamino- oder hydroxyfunktionelle Verbindung bei Raumtemperatur fest, bei Temperaturen oberhalb 60°C jedoch flüssig ist.

6. Verfahren nach einem der Ansprüche 4 bis 5, dadurch gekennzeichnet, daß die Schale der Mikrokapseln aus einem Poly(meth)acrylat, insbesondere Polymethylmethacrylat besteht.

7. Verfahren nach Anspruch 6, dadurch gekennzeichnet, daß man als Lösungsmittel γ-Butyrolacton, Tetrahydrofuran, N-Vinylpyrrolidon, N-Methylpryrrolidon oder deren Gemische verwendet.

8. Verfahren nach einem der Ansprüche 1 bis 7, dadurch gekennzeichnet, daß man dem Lösungsmittel oder Lösungsmittelgemisch bis zu 30 Gew.% Wasser zusetzt.

9. Verfahren nach einem der Ansprüche 1 bis 7, dadurch gekennzeichnet, daß man dem Lösungsmittel oder Lösungsmittelgemisch Isocyanatpräpolymer zusetzt.

10. Verfahren nach Anspruch 9, dadurch gekennzeichnet, daß der Gehalt an Isocyanatpräpolymeren in der Injektionsmischung bis zu 10 Gew.% beträgt.

11. Verfahren nach einem der Ansprüche 1 bis 10, dadurch gekennzeichnet, daß man beim Erzeugen des Dicht- und Klebmittelstranges die Lösungsmittelinjektion erst mit geringer zeitlicher Verzögerung gegenüber dem Extrudieren des Stranges beginnt und kurz vor Beendigung des Extrudierens beendet.

12. Verfahren nach einem der Ansprüche 1 bis 11, dadurch gekennzeichnet, daß man sich zu seiner Durchführung einer Extrusionsdüse (1) für den Dicht- und Klebmittelstrang (11) bedient, die eine in die Düse einmündende Injektionsnadel (4) für das Lösungsmittel aufweist, deren Austrittsöffnung in die Extrusionseinrichtung gerichtet und im Bereich der Mittelachse der den Strang formenden Extrusionsöffnung (3) angeordnet ist.

## Claims

1. A process for the production of a strand of sealing compound and adhesive, in particular for the direct glazing of motor vehicles, using a moisture hardening one-component polyurethane composition based on telechelate isocyanate prepolymers of aromatic diisocyanates in stoichiometric excess and polyols, characterised in that a composition containing
a) a catalyst for moisture hardening and
b) a blocked cross-linking agent which can be activated is used and a polar aprotic solvent or solvent mixture which releases the blocked cross-linking agent is continuously injected into the strand during its extrusion.

2. A process according to Claim 1, characterised in that it contains a tin compound as catalyst.

3. A process according to Claim 1 or Claim 2, characterised in that it contains a methylene dianiline/sodium chloride complex compound as blocked cross-linking agent.

4. A process according to Claim 1 or Claim 2, characterised in that it contains a polyamino-functional or hydroxy-functional compound in micro encapsulated form as blocked cross-linking agent.

5. A process according to Claim 4, characterised in that the polyamino-functional or hydroxy-functional compound is solid at room temperature but liquid at temperatures above 60°C.

6. A process according to one of the Claims 4 to 5, characterised in that the shell of the micro capsules consists of a poly(meth)acrylate, in particular polymethyl methacrylate.

7. A process according to Claim 6, characterised in that the solvent used is -butyrolactone, tetrahydrofuran, N-vinylpyrrolidone, N-methylpyrrolidone or mixtures thereof.

8. A process according to one of the Claims 1 to 7, characterised in that up to 30% by weight of water is added to the solvent or solvent mixture.

9. A process according to one of the Claims 1 to 7, characterised in that isocyanate prepolymer is added to the solvent or solvent mixture.

10. A process according to Claim 9, characterised in that the isocyanate prepolymer content in the injection mixture is up to 10% by weight.

11. A process according to one of the Claims 1 to 10, characterised in that in the production of the strand of sealing compound and adhesive, the injection of solvent begins with a slight time delay compared with extrusion of the strand and is terminated shortly before extrusion is terminated.

12. A process according to one of the Claims 1 to 11, characterised in that for carrying out the process there is used an extrusion die (1) for the strand of sealing compound and adhesive (11), which die has an injection needle (4) for the solvent opening into the die, the outlet opening of which needle is directed into the extrusion device and is situated in the region of the central axis of the extrusion opening (3) which forms the strand.

## Revendications

1. Procédé d'obtention d'un toron d'étanchéité et d'adhésif, en particulier pour la pose directe des vitres des véhicules automobiles, en utilisant une masse de polyuréthanne mono-composant durcissant à l'humidité à base de prépolymères d'isocyanates téléchéliques à partir de diisocyanates aromatiques en excès par rapport à la stoechiométrie, et de polyols, caractérisé en ce que l'on utilise une masse qui contient :
a) un catalyseur de durcissement à l'humidité et,
b) un agent de réticulation activable, bloqué et en ce que l'on injecte lors de l'extrusion du toron d'une manière continue dans son intérieur un solvant polaire aprotique ou un mélange de solvants qui libère l'agent de réticulation bloqué.

2. Procédé selon la revendication 1, caractérisé en ce que comme catalyseur il contient un composé de l'étain.

3. Procédé selon la revendication 1 ou 2, caractérisé en ce qu'il contient comme agent de réticulation bloqué, un composé complexe Méthylènedianiline/Chlorure de sodium.

4. Procédé selon la revendication 1 ou 2, caractérisé en ce qu'il contient comme agent de réticulation bloqué, un composé polyaminofonctionnel ou hydroxyfonctionnel sous forme micro-encapsulée.

5. Procédé selon la revendication 4, caractérisé en ce que le composé polyaminofonctionnel ou hydroxyfonctionnel est solide à température ambiante mais cependant liquide à des températures au-dessus de 60°C.

6. Procédé selon l'une des revendications 4 à 5, caractérisé en ce que la coquille des microcapsules est formée d'un poly(méth)acrylate, en particulier le polyméthacrylate de méthyle.

7. Procédé selon la revendication 6, caractérisé en ce que l'on utilise comme solvant la γ-butyrolactone, le tétrahydrofuranne, la N-vinylpyrrolidone, la N-méthylpyrrolidone, ou leurs mélanges.

8. Procédé selon l'une des revendications 1 à 7, caractérisé en ce que l'on ajoute au solvant ou au mélange de solvants jusqu'à 30 % en poids d'eau.

9. Procédé selon l'une des revendications 1 à 7, caractérisé en ce que l'on ajoute au solvant ou au mélange de solvants un prépolymère d'isocyanate.

10. Procédé selon la revendication 9, caractérisé en ce que la teneur en prépolymères d'isocyanates dans le mélange d'injection s'élève jusqu'à 10 % en poids.

11. Procédé selon l'une des revendications 1 à10, caractérisé en ce que l'on commence au cours de l'obtention du toron d'agent d'étanchéité et de collage, l'injection de solvant d'abord avec un léger différé dans le temps par rapport à l'extrusion du toron et que l'on termine peu de temps avant l'achèvement de l'extrusion.

12. Procédé selon l'une des revendications 1 à 11, caractérisé en ce que l'on utilise pour la mise en pratique de celui-ci, une buse d'extrusion (1) pour le toron d'agent d'étanchéité et de collage (11) qui possède une aiguille d'injection (4) pour le solvant débouchant dans la buse, dont l'orifice de sortie est orienté dans la direction de l'extrusion et est disposé dans la zone de l'axe médian de l'orifice d'extrusion (3) formant le toron.
